# EUROPÄISCHE PATENTANMELDUNG

(11) **EP 1 078 790 A2**
(43) Veröffentlichungstag der Anmeldung: **28.02.2001**
(21) Anmeldenummer: 99121671.4
(22) Anmeldetag: 02.11.1999
(51) Int. Cl.: B60H 1/00

(54) **Gehäuse, vorzugsweise für Lüftungs-, Heizungs- und/oder Klimageräte**

(30) Priorität: 26.08.1999 DE 29914971 U
(71) Anmelder: Liebherr-Verkehrstechnik GmbH, 1020 Wien (AT)
(72) Erfinder: Schubaschitz, Klaus, 1050 Wien (AT); Andrich, Eduard, 1220 Wien (AT)
(74) Vertreter: Gossel, Hans K., Dipl.-Ing.

(57) **Zusammenfassung**

Ein Gehäuse (1), vorzugsweise für Lüftungs-, Heizungs- und/oder Klimageräte, besteht aus einer Deck- und einer Bodenwand (6,14) und aus Seitenwänden (15,16) aus Blech. Um ein derartiges Gehäuse bei geringerem Materialeinsatz in wirtschaftlicherer Weise fertigen zu können, weisen die die Wände (6,14,15,16,12) bildenden Bleche U-förmig abgewinkelte Ränder (17,18) auf und sind über die Stegteile und schmalen U-Schenkel (18) miteinander verbunden.

## Beschreibung

Die Erfindung betrifft ein Gehäuse, vorzugsweise für Lüftungs-, Heizungs- und/oder Klimageräte, bestehend aus einer Deck- und einer Bodenwand und aus Seitenwänden aus Blech.

Es ist bekannt, derartige Gehäuse von Lüftungs-, Heizungs- und/oder Klimageräten zur Beheizung und/oder Klimatisierung unter deren Fahrgestellen von Reisezugwagen zu befestigen, wobei jedes Gehäuse mit einer Einlaßöffnung versehen ist, die mit einer Leitung zum Ansaugen von Frischluft und/oder Umluft aus dem Reisezugwagen und einer Ausblasöffnung versehen ist, die wiederum durch eine Leitung mit dem Reisezugwagen verbunden ist. Bekannte Gehäuse dieser Art bestehen aus einer Tragrahmenkonstruktion, die jedoch den Nachteil aufweist, daß die Konstruktion ein großes Gewicht hat und daß durch eine große Anzahl von Schweißnähten Verzüge auftreten können. Aufgrund des baulichen Aufwands sind die Kosten derartiger Tragrahmenkonstruktionen erheblich.

Aufgabe der Erfindung ist es daher, ein Gehäuse der eingangs angegebenen Art zu schaffen, das sich bei geringerem Materialeinsatz in wirtschaftlicherer Weise fertigen läßt.

Erfindungsgemäß wird diese Aufgabe dadurch gelöst, daß die die Wände bildenden Bleche U-förmig abgewinkelte Ränder aufweisen und über deren Stegteile und schmalen U-Schenkel miteinander verbunden sind.

Das erfindungsgemäße Verbindungsprinzip der die Wände des Gehäuses bildenden Bleche besteht darin, daß diese in Ihren Verbindungsbereichen U-förmig abgewinkelte Ränder aufweisen, so daß bei der rechtwinkeligen Verbindung der Wände immer die innen liegenden schmalen U-Schenkel der Ränder mit den Stegteilen der U-förmig profilierten Ränder der anderen Wand verbunden werden. Die Breite der U-Schenkel entspricht dabei im wesentlichen der Breite der Stegteile, so daß die miteinander zu verbindenden streifenförmigen Teile der U-förmig profilierten Ränder flächig aufeinander liegen und somit ein ausreichend großer Raum zur Verbindung zur Verfügung steht.

Die Verbindung der flächig aufeinander liegenden Streifen der U-förmig profilierten Ränder kann durch Nieten, Schrauben, Schweißpunkte und/oder Schweißnähte erfolgen.

Durch die U-förmige Profilierung der Ränder der die Seitenwände bildenden Bleche werden diese ausgesteift, so daß sich bei der erfindungsgemäßen Gehäusekonstruktion steife rahmenartige Randprofile ergeben, ohne daß eine Tragrahmenkonstruktion, mit der die die Wände bildenden Bleche verbunden werden müssen, vorhanden ist.

Um die erforderliche Dichtigkeit des Gehäuses zu erzielen, können Schweißnähte vorgesehen werden. Etwa noch vorhandene Spalte können auch durch übliche Dichtungsmassen abgedichtet werden.

Zweckmäßigerweise sind die Wände der Gehäuse von Lüftungs-, Heizungs- und/oder Klimageräten mit Isolierstoffplatten verkleidet, deren Ränder in die durch die U-förmigen Abwinkelungen gebildeten Nuten greifen. Die Isolierstoffplatten können durch Bleche, z.B. Aluminiumbleche, abgedeckt sein, deren Ränder an den nach innen weisenden, schmalen U-Schenkeln befestigt sind, um die Isolierstoffplatten vor direkter Hitzeeinwirkung zu schützen.

Zweckmäßigerweise ist eine Gehäuseseite durch einen Klappdeckel verschließbar, der mindestens zwei abgewinkelte Seitenränder aufweist. Dieser Klappdeckel ermöglicht einen einfachen Zugang zu dem Inneren des Gehäuses zu Reparatur- oder Wartungszwecken.

Mindestens zwei Seitenränder des Klappdeckels können durch ein U-förmiges Blechprofil, deren Ränder aufeinander zu abgewinkelt sind, ausgesteift sein. Diese Abwinkelungen von den Schenkeln des U-förmigen Blechprofils dienen der Verbindung mit dem aus Blech bestehenden Klappdeckel.

Die Randprofile der durch den Klappdeckel verschließbaren offenen Seite des Gehäuses können durch U-förmige Abwinkelungen gebildet sein.

Diese U-förmigen Abwinkelungen sind zweckmäßigerweise an Ihrer offenen Seite durch eingelegte und an diesen befestigte U-förmig profilierte oder angepaßte, mehrfach abgewinkelte Bleche ausgesteift.

Eine zweckmäßige Eckausbildung des Gehäuses zeichnet sich dadurch aus, daß im Bereich der Ecken ein innerer Schenkel eines der U-förmig abgewinkelten Ränder über die Höhe des inneren Schenkels des anderen Randes freigeschnitten ist und die aufeinanderstoßenden Ränder an ihrer Stoßkante miteinander verschweißt sind.

Zweckmäßigerweise weist das Gehäuse an mindestens einer Stirnseite einen ausgesteiften Rand auf, der insbesondere dann von Vorteil ist, wenn diese Seite durch einen Klappdeckel verschlossen werden soll. In weiterer Ausgestaltung der Erfindung ist daher vorgesehen, daß ein mit einer Stirnseite verbundenes U-förmiges Randprofil vorgesehen ist, dessen nach außen weisenden Schenkel mit mindestens einem Schlitz versehen sind, in den der innere Schenkel des U-förmigen Randes einer angeschlossenen Wand greift. Der äußere Schenkel des Randprofils kann im Bereich der Randkante des inneren Schenkels mit einem Schlitz versehen sein, der dem Verschweißen mit der Randkante dient. Zur Aussteifung des U-förmigen Randprofils kann von einem inneren Schenkel dieses Randprofils ein dieses zum Kastenprofil schließender Lappen abgewinkelt sein.

Nach einer weiteren Ausführungsform, für die selbständiger Schutz beansprucht wird, ist vorgesehen, daß der mit dem Boden oder der Deckplatte verbundene Motorsockel aus einem aus einem Blechzuschnitt gebogenen, etwa pyramidenstumpfförmigen Teil besteht. Der erfindungsgemäße Motorsockel zeichnet sich durch eine besonders einfache Bauweise dadurch aus, daß er nach dem Faltschachtelprinzip aus einem flachliegenden Blechzuschnitt gebogen ist.

Zweckmäßigerweise ist von mindestens einem Seitenblech des pyramidenstumpfförmigen Teils eine Befestigungslasche in die Ebene der Boden- oder Deckplatte abgebogen. Eine Befestigungslasche kann durch einen Bolzen, um die der Motorsockel schwenkbar ist, mit der Boden- oder Deckplatte verbunden sein. Zweckmäßigerweise ist eine zweite Befestigungslasche vorgesehen, über die der Motorsokkel fest mit dem diesen tragenden Blech verbunden ist.

Ausführungsbeispiele der Erfindung werden nachstehend anhand der Zeichnung näher erläutert. In dieser zeigt
- Fig. 1: eine Seitenansicht eines Gehäuses eines Lüftungs-, Heizungs- und/oder Klimageräts, das unter dem Fahrgestell eines Reisezugwagens befestigt wird,
- Fig. 2: eine Draufsicht auf das Gehäuse nach Fig. 1,
- Fig. 3: eine Vorderansicht des Gehäuses nach Entfernung des die Vorderseite verschließenden Klappdeckels,
- Fig. 4: eine Rückansicht des Gehäuses,
- Fig. 5: einen Schnitt durch das Gehäuse längs der Linie A-A in Fig. 1,
- Fig. 6: eine vergrößerte Darstellung der Einzelheit Z aus Fig. 5,
- Fig. 7: eine vergrößerte Darstellung der Einzelheit X aus Fig. 1,
- Fig. 8: einen Schnitt durch die durch den Klappdeckel verschlossene Vorderseite des Gehäuses längs der Linie B-B in Fig. 1,
- Fig. 9: eine vergrößerte Darstellung der Einzelheit Y aus Fig. 8,
- Fig. 10: eine Draufsicht auf den Motorsockel,
- Fig. 11: eine Seitenansicht des Motorsockels nach Fig. 10,
- Fig. 12: einen Schnitt durch den Motorsockel längs der Linie A-A in Fig. 11,
- Fig. 13: und Fig. 14 die linke obere Eckausbildung der aus Fig. 3 ersichtlichen Öffnungsseite.

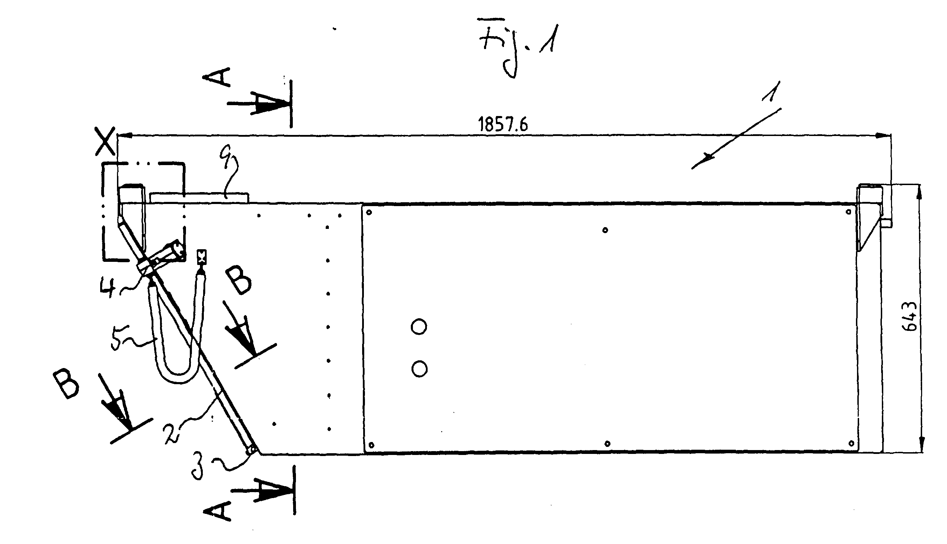

Das Gehäuse 1 weist eine im wesentlichen quaderförmige Gestalt auf. Es ist jedoch an seiner Vorderseite in der aus Fig. 1 ersichtlichen Weise abgeschrägt. Diese abgeschrägte Vorderseite ist durch einen Klappdeckel 2 verschließbar, der mit dem Gehäuse 1 um Gelenke 3 schwenkbar verbunden ist. Er ist in seiner angeklappten Stellung mit dem Gehäuse 1 durch einen Verschluß 4 verriegelt. Um den aus der Verriegelung 4 gelösten Klappdeckel in einer abgeklappten Stellung zu halten, ist ein Seil 5 oder ein flexibles Zugelement vorgesehen, das einerseits mit dem Klappdeckel 2 und andererseits mit einer Gehäuseseitenwand verbunden ist und den abgeklappten Klappdeckel 2 in seiner gelösten Stellung in einer vorbestimmten Winkellage zu dem Gehäuse 1 hält.

Das Gehäuse 1 ist in den Eckbereichen seiner oberen Deckwand 6 mit der Befestigung dienenden Befestigungsstücken 7 versehen, die über der Befestigung dienende Laschen mit dem Gehäuse 1 verschweißt sind.

Das Gehäuse 1 weist in seiner oberen Deckwand eine rechteckige Einlaßöffnung 8 auf, die mit einem zu der Deckwand rechtwinkelig hochgestellten Rand 9 versehen ist.

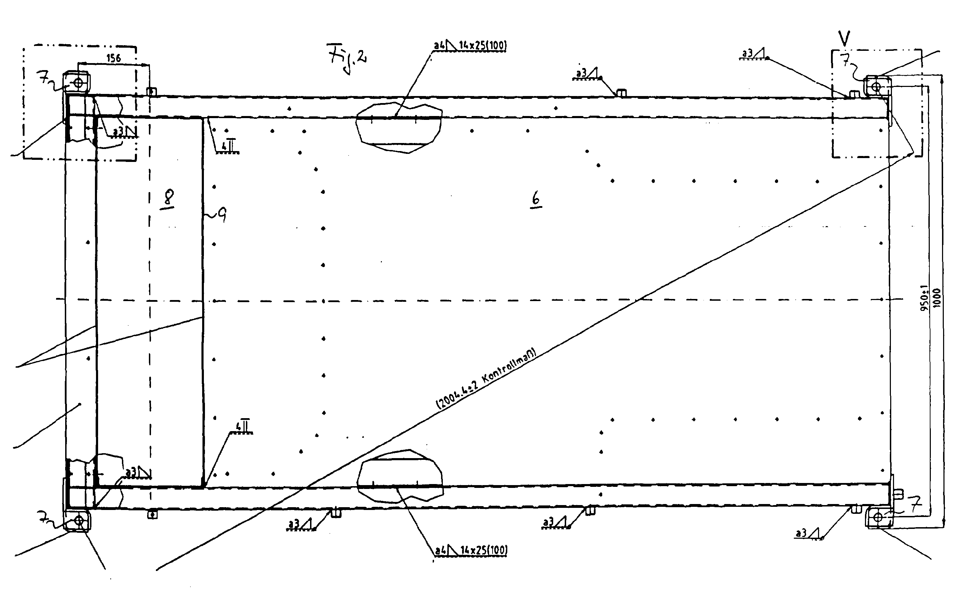

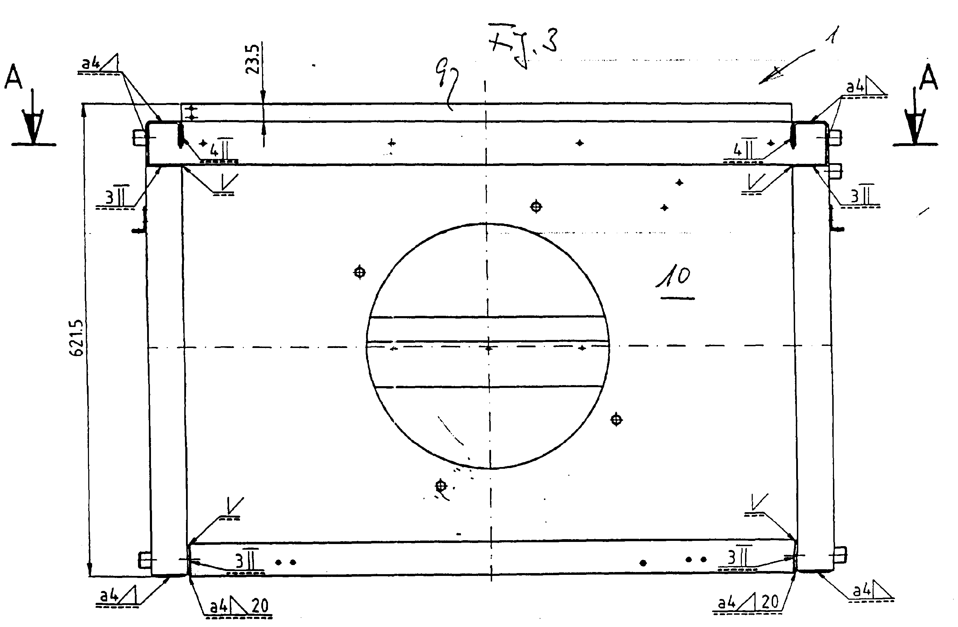

Fig. 3 zeigt eine Vorderansicht des Gehäuses 1 mit entferntem Klappdeckel 2 und gibt eine Sicht auf eine quer verlaufende Zwischenwand 10 frei, die mit einer kreisförmigen Öffnung versehen und auf deren Rückseite der Ansaugkanal eines Lüfters befestigt ist.

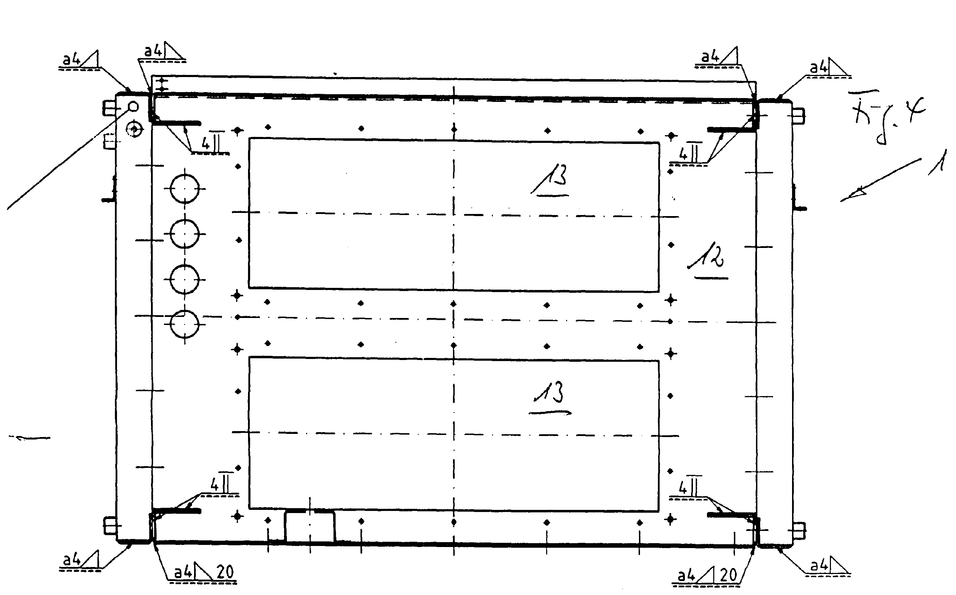

Aus Fig. 4 ist die Rückseite des Gehäuses 1 ersichtlich, die durch eine Rückwand 12 mit zwei Austrittsöffnungen 13 für die Warmluft oder die konditionierte Luft versehen ist.

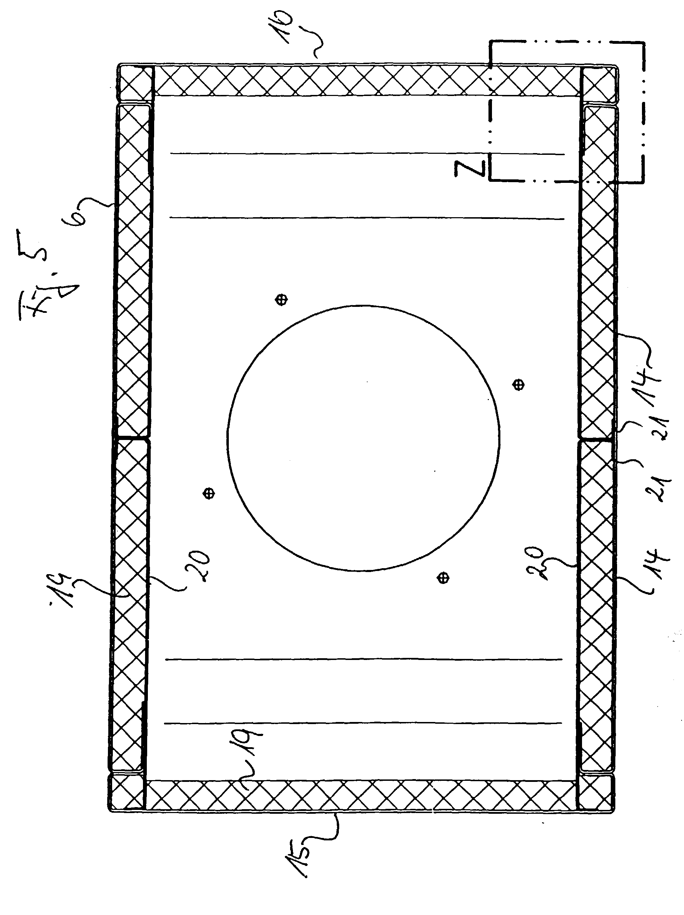

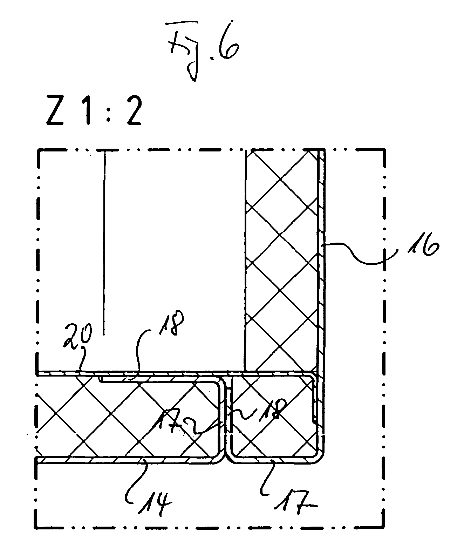

Aus Fig. 5 ist ein Schnitt durch das Gehäuse 1 längs der Linie A-A in Fig. 1 ersichtlich, der die Art der Verbindung der Deckwand 6 und der Bodenwand 14 mit den Seitenwänden 15, 16 zeigt. Die die Deck- und Bodenwände 6, 14 und die Seitenwände 15, 16 bildenden Bleche sind mit U-förmig abgewinkelten Rändern versehen, die in vergrößerter Darstellung aus Fig. 6 ersichtlich sind. Diese U-förmigen Abwinkelungen bestehen aus von den Wandflächen etwa rechtwinkelig abgewinkelten Stegteilen 17 und von diesen nach innen hin parallel zu den Wandflächen abgewinkelten schmalen Schenkeln 18. Die rechtwinkelige Verbindung der Wände 6, 14 und 15, 16 erfolgt dadurch, daß in der aus den Fig. 5 und 6 ersichtlichen Weise die schmalen Schenkel 18 der U-förmigen Randprofile auf die Stegteile 17 gelegt und mit diesen verbunden werden. Dabei kann die Verbindung vorzugsweise durch Nieten, aber auch durch Schrauben, Punktschweißen oder Schweißnähte erfolgen. Soweit durch eine Nietung eine genügend dichte Verbindung nicht erzielt werden kann, können zusätzlich Schweißnähte angebracht werden. Zwischen den Nietverbindungen vorhandene Spalten können auch durch übliche Dichtungsmittel, beispielsweise Kunststoffklebstoffe, geschlossen werden.

Die Wände des Gehäuses 1 sind auf ihren Innenseiten durch übliche eingelegte Isolierstoffplatten 19 isoliert. Diese Isolierstoffplatten können mit Metallplatten 20, beispielsweise aus Aluminiumblech, abgedeckt sein. Diese Abdeckplatten 20 sind in der aus den Fig. 5 und 6 ersichtlichen Weise mit den abgewinkelten schmalen Schenkeln der Randprofilierungen der Bodenplatte 14 verbunden. Die Verbindung kann wiederum durch Nieten oder Kleben erfolgen.

Wie aus Fig. 5 ersichtlich, kann das Deckblech 20 mit einer T-förmigen Faltung versehen sein, deren Schenkel 21 mit dem Bodenblech 14 verbunden sind. In entsprechender Weise kann die deckseitige Isolierstoffplatte 19 durch eine Blechabdeckung 20 mit der Deckplatte 6 verbunden sein.

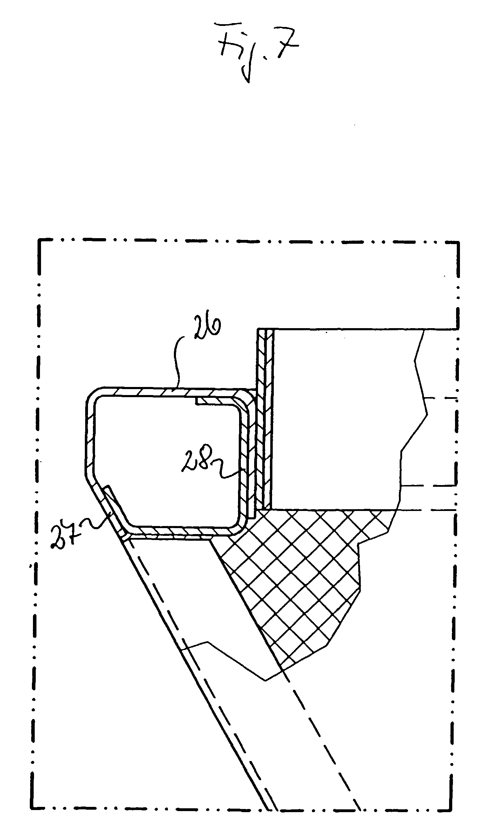

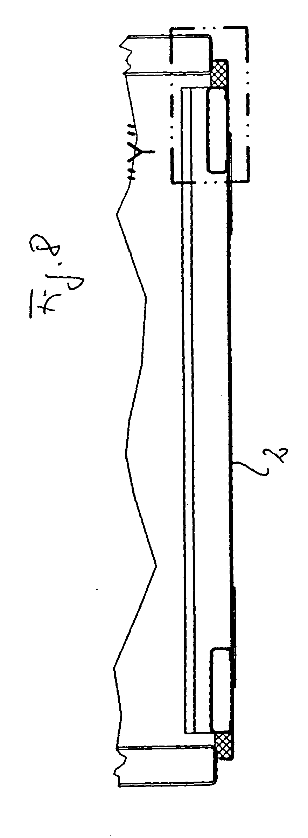

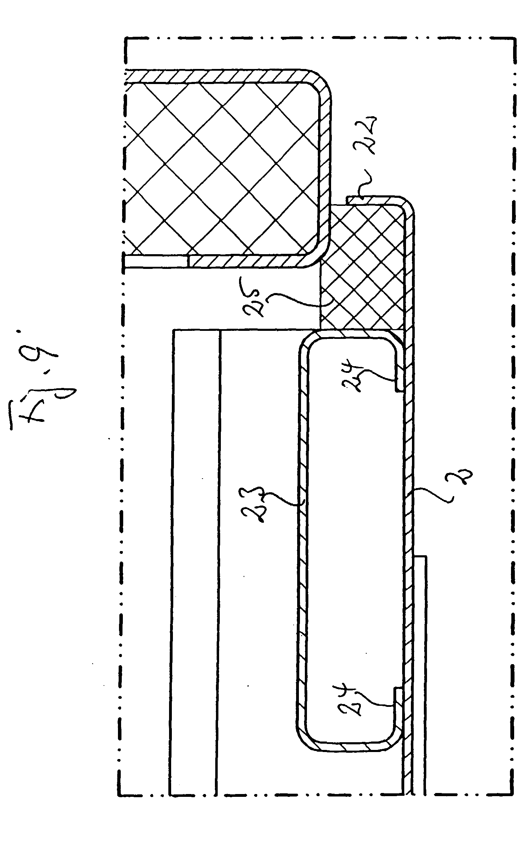

Wie aus den Fig. 8 und 9 ersichtlich ist, ist der Klappdeckel 2 an seinen seitlichen Rändern mit Abwinkelungen 22 versehen. Die Randbereiche des Klappdeckels 2 sind durch U-förmige Profile 23, deren Schenkel nach innen gerichtete Abwinkelungen 24 besitzen, ausgesteift. Die Profile 23 sind durch ihre Abwinkelungen 24 mit dem den Klappdeckel 2 bildenden Blech verbunden. Zwischen der Abwinkelung 22 und einem seitlichen Schenkel des Verstärkungsprofil 23 ist eine Nut gebildet, in der ein Dichtungsprofil 25 aus einem elastomeren Werkstoff gehaltert ist.

Wie aus Fig. 9 ersichtlich ist, sind die äußeren Ränder der abgeschrägten Seitenwände 15, 16 ebenfalls durch entsprechende Abwinkelungen U-förmig profiliert.

Das obere Randprofil der abgeschrägten Hinterseite ist in der aus Fig. 7 ersichtlichen Weise durch ein mit dem U-förmigen Randprofil der Deckwand 6 verbundenen U-förmig gebogenen Blech 26 gebildet, dessen äußerer Schenkel in seinem unteren Bereich mit einer schrägen Abwinkelung 27 versehen ist, der in der Ebene des schräg verlaufenden Deckels 2 liegt. Zur Aussteifung dieses Randprofils 26 ist in dieses ein entsprechend profiliertes Blech 28 eingelegt. Dieses Blech 28 ist mit dem Randprofil 26 durch übliche Verbindungen, beispielsweise Schweißverbindungen, verbunden, so daß sich ein aussteifendes Kastenprofil ergibt.

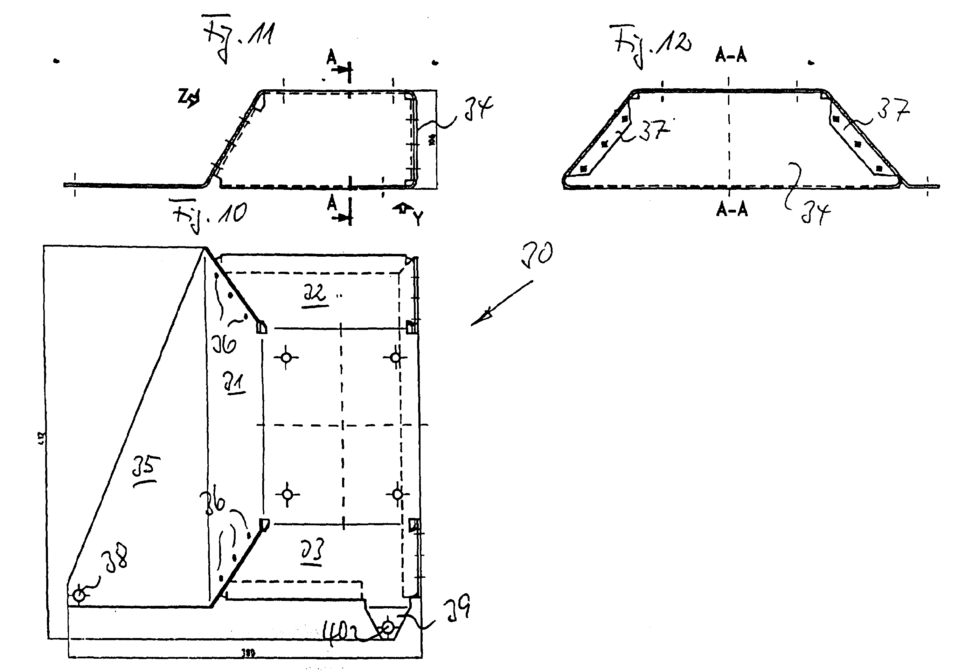

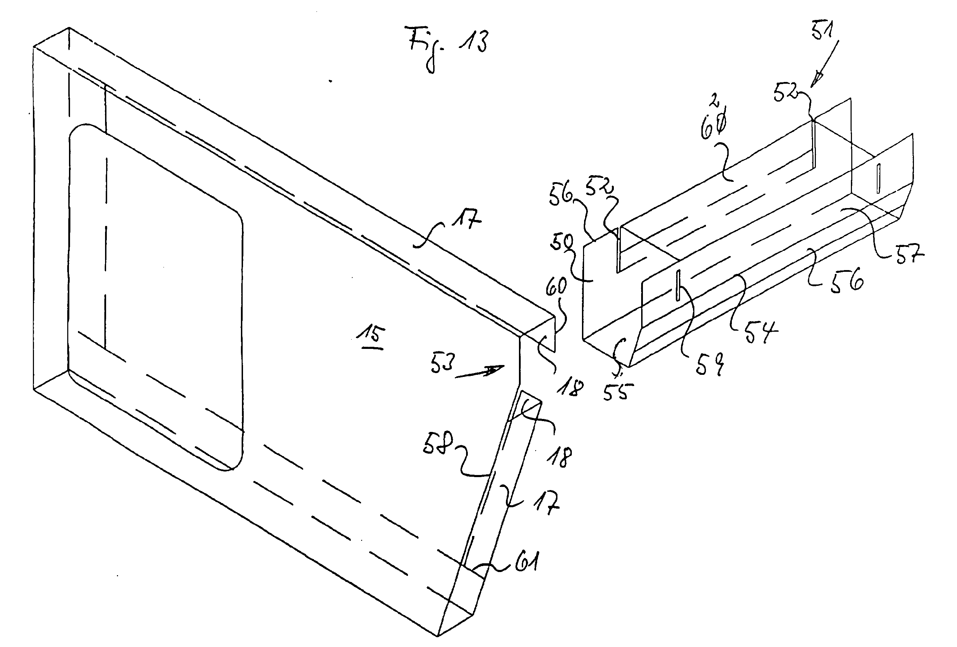

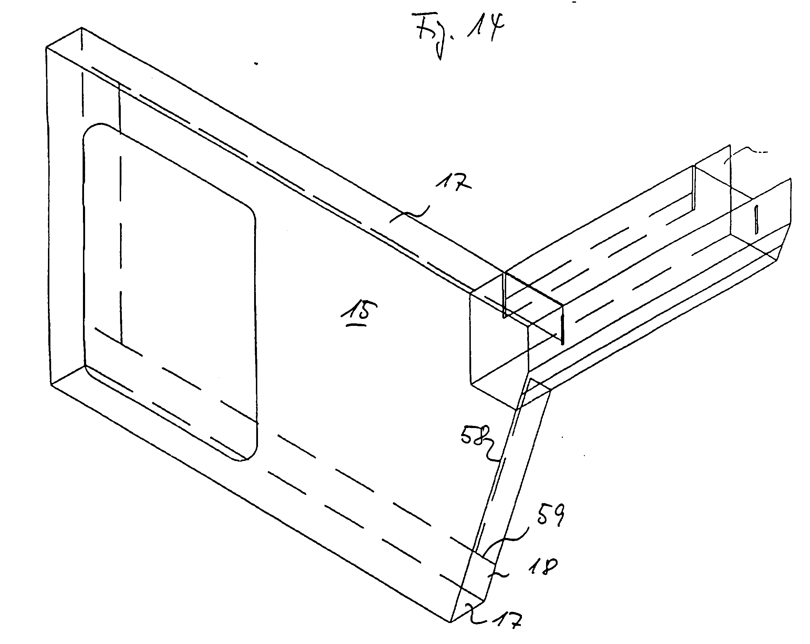

Mit der Bodenplatte 20 des Gehäuses ist der aus den Fig. 11 bis 12 ersichtliche Motorsockel verbunden. Dieser Motorsockel 30 ist aus einem Blechzuschnitt gebogen, dessen Form sich daraus ergibt, daß dessen schrägen Seiten 31 bis 33 und dessen rechtwinkelig zu dem Boden 20 stehende Rückwand 34 in die Ebene der Befestigungslasche 35 gebogen werden. Die die seitlichen pyramidenstumpfförmigen Flächen 32, 33 bildenden Teile sind an ihren Rändern mit abgewinkelten der Befestigung dienenden Laschen versehen, von denen aus Fig. 12 die rechtwinkelig abgebogenen Laschen 37 ersichtlich sind, die mit der Rückwand 34 vernietet sind. Darüberhinaus sind die pyramidenstumpfförmigen Seiten 32, 33 mit nicht dargestellten abgewinkelten Laschen versehen, die durch die Nietverbindungen 36 mit der schrägen pyramidenstumpfförmigen Seite 31 vernietet sind. Die dreieckige Befestigungslasche 35 ist durch einen die Bohrung 38 durchsetzenden Bolzen mit der Bodenplatte 20 verbunden. Auf diese Weise ist der Motorsockel um den die Bohrung 38 durchsetzenden Bolzen schwenkbar. Die pyramidenstumpfförmige Seitenfläche 33 ist mit einer kurzen Lasche 39 versehen, die mit einer Bohrung 40 versehen ist, durch die der Motorsockel 30 durch eine Niet- oder Schraubenverbindung fest mit der Bodenplatte 20 verbunden werden kann.

Anhand der Fig. 13 und 14 wird nun die linke obere Eckausbildung der aus Fig. 3 ersichtlichen Öffnungsseite näher erläutert. Mit dem Rand bzw. dem Stegteil des U-förmigen Randes der Deckwand ist der innere Schenkel 50 des aus einem Blechzuschnitt gebogenen U-förmigen Randprofils 51 durch Niete oder in sonstiger Weise verbunden. An die Enden dieses U-förmigen Randprofils 51 sind die oberen Ekken der Seitenwände 15, 16 angeschlossen, wie es in Bezug auf die Seitenwand 15 näher beschrieben wird. Die Seitenwand 15 ist an ihrem oberen Rand mit der U-förmigen Abwinkelung versehen, die in der beschriebenen Weise aus dem Stegteil 17 und dem von diesem nach innen hin abgewinkelten inneren Schenkel 18 besteht. Im Abstand der Breite des Stegs 17 ist der innere Schenkel 50 des U-förmigen Randprofils 51 von seiner Kante her mit einem Schlitz 52 versehen, der nach oben hin ausläuft und dessen Tiefe der Breite des inneren Schenkels 18 entspricht.

Zum Zusammenfügen ist der obere Eckbereich 53 der Seitenwand 15 mit einem Freischnitt versehen, dessen Form dem außen liegenden Schenkel 54 des U-förmigen Randprofils 51 entspricht, der aus einem an den Steigteil 55 anschließenden schräg verlaufenden Abschnitt 56 und einem äußeren Abschnitt 57 besteht, der zu dem anderen Schenkel 50 parallel verläuft. Zum Zusammenfügen des Eckbereichs wird dieser in der aus Fig. 14 ersichtlichen Weise in den Schlitz 52 eingehängt, so daß das Stegteil 17 der Seitenwand sich auf der durch den Schlitz 52 freigeschnittenen Kante 56 des Endteils des inneren Schenkels 50 abstützt und der freigeschnittene Eckbereich an der Innenseite des abgewinkelten Schenkels 54 anliegt.

Von dem schräg verlaufenden äußeren Seitenwand 58 der Seitenwand 15 ist ebenfalls ein U-förmiges Randprofil 17, 18 abgewinkelt, das in der dargestellten Weise mit einem Freischnitt versehen ist, so daß sich die oberen Ränder des Stegteils 17 und des inneren Schenkels 18 im zusammengefügten Zustand auf dem Stegteil 55 des Randprofils 51 abstützen. Die aufeinander stoßenden Kanten der Profile können mit den entsprechenden Stegteilen und inneren Schenkeln verschweißt sein.

Der obere Abschnitt 57 des äußeren Schenkels 54 des U-förmigen Randprofils 51 ist parallel zu dem Schlitz 52 mit einem Schlitz 59 versehen, durch den hindurch die Kante 60 des inneren Schenkels des Randprofils 18 mit dem Abschnitt 57 des äußeren Schenkels 54 des Randprofils 51 verschweißt ist.

Auch der untere Rand der Seitenwand 15 ist mit einer U-förmigen Randausbildung 17, 18 versehen. Der innere Schenkel des schräg verlaufenden Stimrandes 58 ist an seinem unteren Ende mit einem Freischnitt versehen, dessen Länge der Breite des inneren Schenkels 18 des Randprofils des unteren Randes der Seitenwand 15 entspricht. Auf diese Weise stoßen die Stimränder der inneren abgewinkelten Schenkel 18 des unteren Randes und des schräg verlaufenden Randes aufeinander, so daß sie an ihrer Stoßstelle 61 miteinander verschweißt werden können.

Von dem Schenkel 50 des oberen U-förmigen Randprofils 51 ist ein Lappen 62 angrenzend an die Schlitze 52 abgewinkelt, dessen Rand mit dem oberen Rand des Schenkels 54 verschweißt ist, so daß das U-förmige Profil zu einem stabilen Kastenprofil geschlossen ist.

## Patentansprüche

1. Gehäuse (1), vorzugsweise für Lüftungs-, Heizungs- und/oder Klimageräte, bestehend aus einer Deck- und einer Bodenwand (6, 14) und aus Seitenwänden (15, 16) aus Blech,
dadurch gekennzeichnet,
daß die die Wände (6, 14, 15, 16, 12) bildenden Bleche U-förmig abgewinkelte Ränder (17, 18) aufweisen und über deren Stegteile (17) und schmalen U-Schenkel (18) miteinander verbunden sind.

2. Gehäuse nach Anspruch 1, dadurch gekennzeichnet, daß die Verbindungen aus Nieten, Schrauben, Schweißpunkten und/oder Schweißnähten bestehen.

3. Gehäuse nach Anspruch 1 oder 2, dadurch gekennzeichnet, daß die Wände mit Isolierstoffplatten 19 verkleidet sind, deren Ränder in die durch die U-förmigen Abwinkelungen (17, 18) gebildeten Nuten greifen.

4. Gehäuse nach einem der Ansprüche 1 bis 3, dadurch gekennzeichnet, daß die Isolierstoffplatten (19) durch Bleche (20), z.B. Aluminiumbleche, abgedeckt sind, deren Ränder an den nach innen weisenden, schmalen U-Schenkeln (18) befestigt sind.

5. Gehäuse nach einem der Ansprüche 1 bis 4, dadurch gekennzeichnet, daß eine Gehäuseseite durch einen Klappdeckel (2) verschließbar ist, der mindestens zwei abgewinkelte Seitenränder (22) aufweist.

6. Gehäuse nach Anspruch 5, dadurch gekennzeichnet, daß mindestens zwei Seitenränder des Klappdeckels (2) durch U-förmige Blechprofile (23), deren Ränder (24) aufeinander zu abgewinkelt sind, ausgesteift sind.

7. Gehäuse nach einem der Ansprüche 1 bis 6, dadurch gekennzeichnet, daß die Randprofile der durch den Klappdeckel (2) verschließbaren offenen Seite des Gehäuses (1) durch U-förmige Abwinkelungen gebildet sind.

8. Gehäuse nach einem der Ansprüche 1 bis 7, dadurch gekennzeichnet, daß die U-förmigen Abwinkelungen an ihren offenen Seiten durch eingelegte und an diesen befestigte U-förmig profilierte oder angepaßte, mehrfach abgewinkelte Bleche (28) ausgesteift sind.

9. Gehäuse nach einem der Ansprüche 1 bis 8, dadurch gekennzeichnet, daß im Bereich der Ecken ein innerer Schenkel (18) eines der U-förmig abgewinkelten Ränder über die Höhe des inneren Schenkels des anderen Randes freigeschnitten ist und die aufeinander stoßenden Ränder an ihrer Stoßkante (61) miteinander verschweißt sind.

10. Gehäuse nach einem der Ansprüche 1 bis 9, dadurch gekennzeichnet, daß ein mit einer Stirnseite verbundenes U-förmiges Randprofil (51) vorgesehen ist, dessen nach außen weisenden Schenkel mit mindestens einem Schlitz (52) versehen sind, in den der innere Schenkel (18) des U-förmigen Randes einer angeschlossenen Wand (15) greift.

11. Gehäuse nach Anspruch 10, dadurch gekennzeichnet, daß der äußere Schenkel (54) des Randprofils (51) im Bereich der Randkante des inneren Schenkels (18) mit einem Schlitz (59) versehen ist, der dem Verschweißen mit der Randkante dient.

12. Profil nach Anspruch 10 oder 11, dadurch gekennzeichnet, daß von einem Schenkel (50) des U-förmigen Randprofils (51) ein das Randprofil zum Kastenprofil schließender Lappen (62) abgewinkelt ist.

13. Gehäuse, insbesondere nach einem der Ansprüche 1 bis 12, dadurch gekennzeichnet, daß der mit der Boden- oder Deckplatte verbundene Motorsokkel (30) aus einem aus einem Blechzuschnitt gebogenen, etwa pyramidenstumpfförmigen Teil besteht.

14. Gehäuse nach Anspruch 13, dadurch gekennzeichnet, daß von mindestens einem Seitenblech (31, 33) des pyramidenstumpfförmigen Teils eine Befestigungslasche (35, 39) in die Ebene der Boden- oder Deckplatte abgebogen ist.

15. Gehäuse nach Anspruch 13 oder 14, dadurch gekennzeichnet, daß die Befestigungslasche (35) durch einen Bolzen, um die der Motorsockel (30) schwenkbar ist, mit der Boden- oder Deckplatte verbunden ist.
